Europäisches Patentamt

European Patent Office

Office européen des brevets

(19)

(11) Publication number: **0 287 390**
**A2**

# EUROPEAN PATENT APPLICATION

(12)

(21) Application number: 88303420.9

(22) Date of filing: 15.04.88

(51) Int. Cl.⁴: **G 07 F 9/10**
G 07 F 11/10, G 05 D 23/275

(30) Priority: 16.04.87 JP 57894/87
16.04.87 JP 57895/87
16.04.87 JP 57896/87
16.04.87 JP 57897/87
19.08.87 JP 125169/87

(43) Date of publication of application:
19.10.88 Bulletin 88/42

(84) Designated Contracting States: DE GB IT

(71) Applicant: SANDEN CORPORATION
20 Kotobuki-cho
Isesaki-shi Gunma, 372 (JP)

(72) Inventor: Aoki, Kazumi
504 Fukushima Gunma-machi
Gunma-gun Gunma 370-35 (JP)

Kikuchi, Yukio
2308 Minamisengi-cho Isesaki-shi
Gunma 372 (JP)

Fukui, Tsuyoshi
1129 Ota-machi Isesaki-shi
Gunma 372 (JP)

(74) Representative: Stuart, Ian Alexander et al
MEWBURN ELLIS & CO. 2/3 Cursitor Street
London EC4A 1BQ (GB)

(54) Vending machine with temperature control.

(57) An automatic vending machine has refrigerating 16 and heating 17 means. The path of the refrigerated or heated air flow within the storage chamber of the vending machine is automatically varied by a temperature-dependent air flow control device 21. The air flows upwardly through a gap 20 between columns 12 of merchandise, and back through a duct 19 that opens adjacent the top of the columns and preferably also has an intermediate opening 31. A baffle plate 22 may be displaceable to obstruct the gap 20 and/or a cover plate 33 may be displaceable to control the intermediate opening 31. The displacement may be controlled by a pair of opposed spring elements 25,26, one of which is formed of shape memory alloy, so that the combined effect changes sense at a threshold temperature.

Fig. 4

Bundesdruckerei Berlin

## Description

### VENDING MACHINE WITH TEMPERATURE CONTROL

This invention relates to a vending machine having a temperature control mechanism.

In recent years, various types of automatic vending machines have been proposed for dispensing various types of merchandise. Some merchandise, such as cans and bottles of beverages, may be stored in the vending machine with refrigeration or heating to promote the sales of the merchandise.

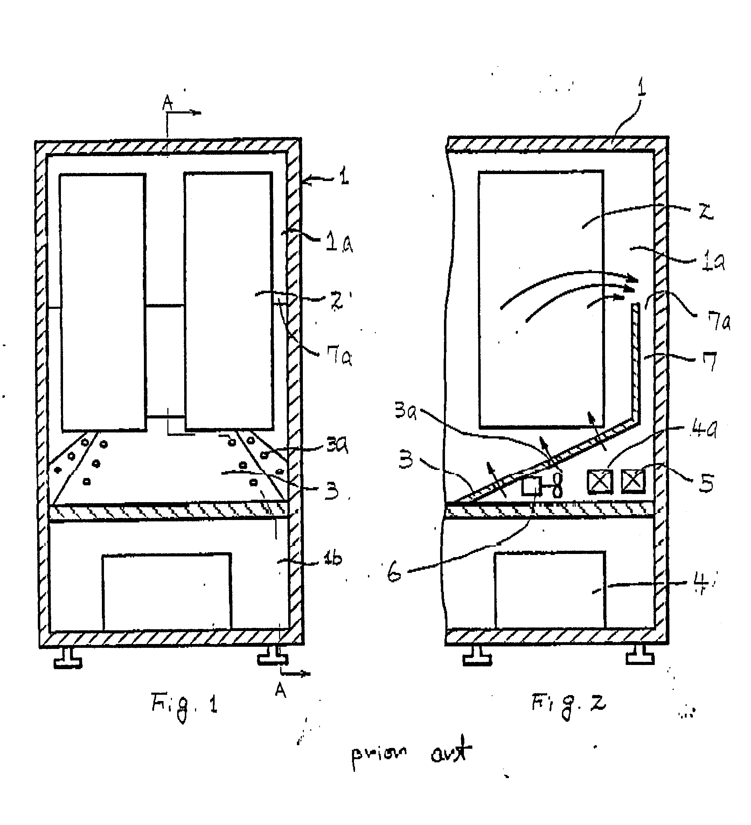

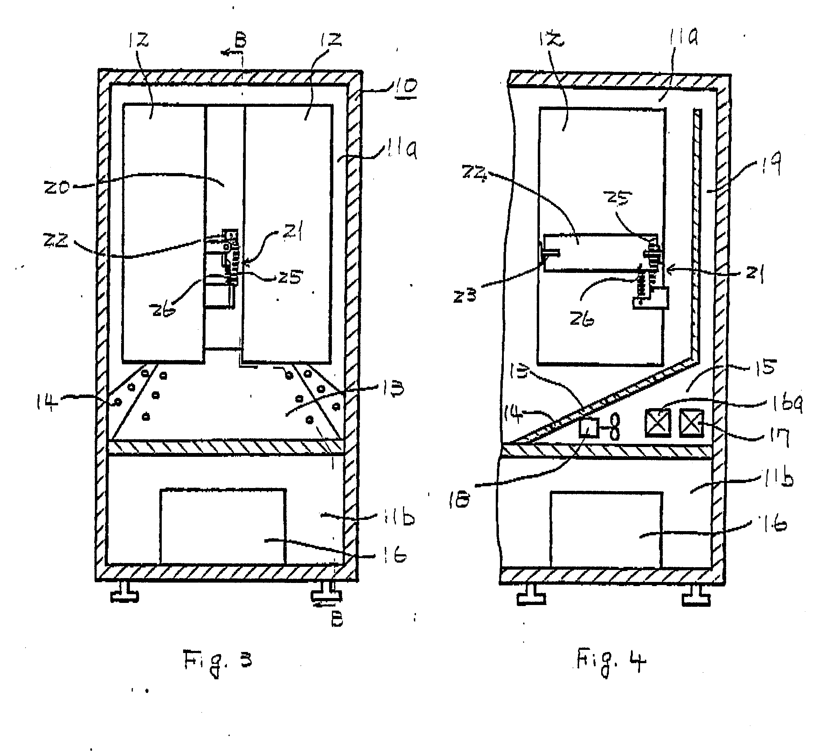

A vending machine with conventional refrigerating and heating mechanism will be explained with reference to Figs. 1 and 2. An interior space of the vending machine 1 is divided into two chambers, such as an upper storage chamber 1a and a lower mechanical chamber 1b. Storage chamber 1a contains a plurality of dispensing columns 2 in which merchandise is stored. A shut plate 3 is disposed below the bottom portion of the dispensing columns 2 at a slant so as to guide dispensed merchandise to a discharge opening (not shown). A plurality of holes 3a are formed through shut plate 3 to permit forced air circulation within the storage chamber 1a. Some parts of refrigerating apparatus 4, such as evaporator 4a, and/or a heating device 5, are disposed in the space behind the slanted shut plate 3, so that refrigerated or heated air can be forced to circulate by operation of a blower fan 6. The main parts of the refrigerating apparatus 4 are in the mechanical chamber 1b.

The refrigerated or heated air is returned to the space behind the shut plate 3, after heat exchange with stored merchandise, through duct 7. The duct 7 is formed on rear side of storage chamber 1a, as clearly shown in Fig. 2. Upper opening 7a of duct 7 is positioned at about half the height of the columns 2. Therefore, the merchandise which is stored on lower half portion of each column 2 is refrigerated or heated.

With such a vending machine, if merchandise is refrigerated, and the rate of dispensing of merchandise is increased (as may occur in the summer time) the efficiency of refrigerating merchandise falls, i.e., the merchandise is dispensed without being fully refrigerated. One solution to this disadvantage is that each column is fully refrigerated by refrigerating apparatus. Particularly, if upper opening 7a of duct 7 is at the level of the upper end portions of the columns 2, the merchandise stored on columns 2 are usually refrigerated. However, if the dispensing rate is then reduced (e.g. in winter time), stored merchandise, particularly stored on upper half space of column 2 may be over-cooled or, correspondingly when the heating device is being used, over-heated. Over-cooled or over-heated merchandise may deteriorate in flavour and quality.

Thus it would be advantageous to provide an automatic vending machine of simple construction in which merchandise can be effectively refrigerated or heated.

It would also be advantageous to provide an automatic vending machine with a refrigerating/ heating device that can maintain the temperature of storage space under favourable conditions for storing merchandise.

The present invention provides a vending machine including a storage chamber having means defining a plurality of columns for merchandise, extending in parallel; refrigerating and/or heating means for causing refrigeration and/or heating of merchandise stored on said columns, said means comprising a refrigerating/heating device disposed in or adjacent a lower portion of said storage chamber and air circulation means comprising an air circulation duct for communicating between a space in which said refrigerating/heating device is disposed and the storage chamber adjacent the merchandise; and an air gap defined between respective said columns; characterised in that said duct has an upper opening adjacent the upper end of said columns, and wherein an air circulation control device is disposed in said air circulation way for controlling the air flow path in dependence upon the temperature conditions of the merchandise.

Some preferred embodiments of the invention will now be described in more detail with reference to the annexed drawings, in which:

Fig. 1 is a sectional view of a vending machine of the prior art;

Fig. 2 is a sectional view taken along a line A-A in Fig. 1;

Fig. 3 is a diagrammatic sectional view of a vending machine with refrigerating and heating mechanism in accordance with one embodiment of this invention;

Fig. 4 is a sectional view taken along a line B-B in Fig. 3;

Figs. 5a and 5b are diagrammatic perspective views for showing the operation of an air circulation control device of the vending machine of Fig. 3;

Fig. 6 is a diagrammatic sectional view of a second embodiment of this invention;

Fig. 7 is a sectional view taken along a line C-C in Fig. 6;

Figs. 8a and 8b are diagrammatic perspective views for showing the operations of an air circulation control device of the vending machine of Fig. 6;

Fig. 9 is a view like Figs. 8 but showing a modified cover plate moving device;

Fig. 10a is a partly sectional view of an air circulation control device in accordance with a third embodiment of this invention;

Fig. 10b is a rear view of the cover plate in Fig. 10a;

Figs. 11a and 11b are diagrammatic perspective views of an air circulation control device in accordance with a fourth embodiment of this invention, showing its operation;

Fig. 12 is a perspective view showing a supporting mechanism as in Fig. 11 with a modified cover plate;

Figs. 13a and 13b are diagrammatic perspective views of a sixth embodiment of an air circulation control device, showing its operation; and

Figs. 14 and 15 show modifications of the driving mechanism for the cover plate in Fig. 13.

Referring to Figs. 3 and 4, an automatic vending machine with termperature control mechanism in accordance with one embodiment of this invention is disclosed. An automatic vending machine 10 has an interior space 11. The interior space 11 is divided into a storage chamber 11a and a mechanical chamber 11b.

A plurality of upright parallel columns 12 for storing merchandise are provided in the storage chamber 11a. A shut plate 13 is disposed adjacent the lower portion of columns 12 at a slant so as to guide dispensed merchandise to a discharge opening (not shown) of the vending machine 10. The shut plate 13 has a plurality of holes 14 for air flow. Since the shut plate 13 is disposed at a slant, a space 15 is delimited behind the shut plate 13. Here are positioned some parts of refrigerating means 16, such as an evaporator 16a; and a heating device 17. The refrigerated or heated air is forced into the main part of the storage chamber 11a by a blower fan 18. The main parts of refrigerating means 16, such as a compressor, condenser and blower fan for cooling the condenser are housed in the mechanical chamber 11b.

An air duct 19 is provided at the rear of the storage chamber 11a to permit air communication between the upper portion of storage chamber 11a and the space 15 behind the shut plate 13. Thus, the refrigerated or heated air is blown into the storage area by the fan 18, and returns to the space 15 through air duct 19 after heat exchange with the merchandise which is stored in the columns 12. The refrigerated or heated air rises through the storage chamber 11a along a vertical air gap 20 formed between respective columns 12.

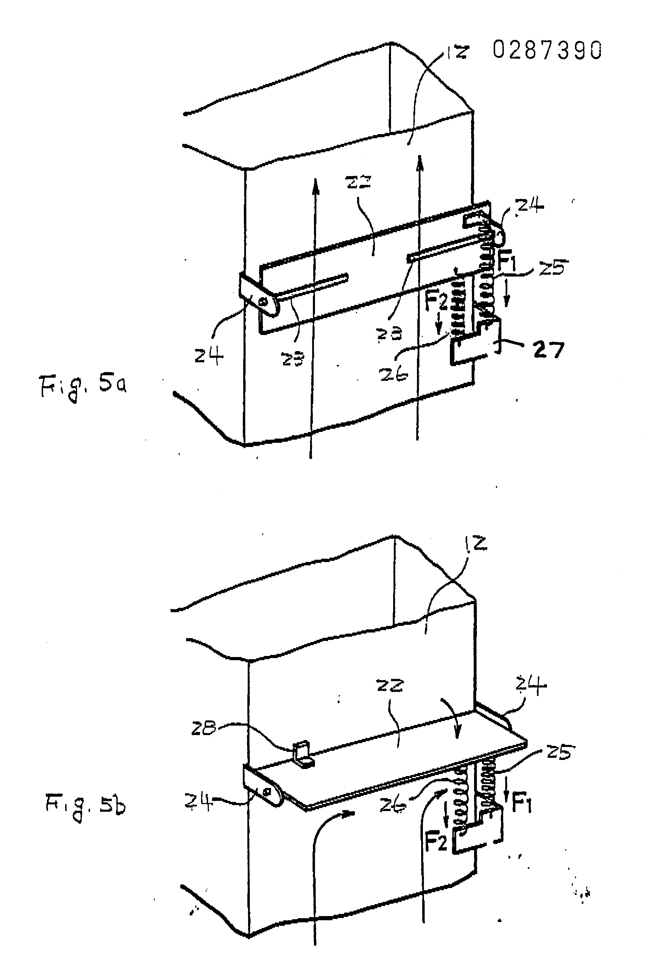

An air circulation control device 21 is disposed in an intermediate region of the air gap 20 to control the direction of air flow. As can be seen in Figs. 5a and 5b, the air circulation control device 21 comprises a rectangular-shaped baffle plate 22, supporting shafts 23 extending from the short sides of the baffle plate 22, to rotatably support the baffle plate 22 on a column 12 through brackets 24, and at least two spring elements 25,26. The spring elements 25,26 are disposed in parallel, each extending between one end portion of a respective long side of the baffle plate 22, and a bracket 27 fixed on the column 12.

A first said spring element 26 urges the baffle plate 22 to a vertical posture, and functions as a bias spring. The second said spring element 25 is formed of an alloy having elastic or shape memory. The transformation point of the shape memory alloy, i.e. the temperature to transform the element to its memorised shape, is selected in consideration of the expected temperature of the exterior space. The recoil strength of this second spring element 25 under normal or lower temperature condition is lower than that of the first, bias spring 26. But above the transformation temperature, the recoil strength of the second spring element 25 is higher than that of the bias spring 26.

Therefore, the air flow passed through air gap 20 is controlled by operation of the baffle plate 22, and operation of the baffle plate 22 is controlled by difference of recoil strength of two spring elements 25,26. The operation of the baffle plate 22 will be explained with reference to Figs. 5a and 5b.

If the merchandise in the vending machine are stored under refrigerating condition, that is drive spring 25 is existing under lower temperature than the transformation temperature, the recoil strength (F2) of bias spring 26 is greater than the recoil strength (F1) of the second, drive spring 25 (that is F1 <; F2). Therefore, baffle plate 22 is vertically positioned for enabling the flow of refrigerating air, as shown in Fig. 5a. The merchandise stored on the column 12 is thus fully refrigerated.

If merchandise in the vending machine is stored under heating conditions, so that drive spring 25 is at a temperature above the transformation temperature, the recoil strength (F1) of the drive spring 25 is greater than the recoil strengh (F2) of bias spring 26 (that is F1 <; F2) . Therefore, baffle plate 22 is urged to pivot to obstruct the air gap 20 to prohibit the heated air flow, as shown in Fig. 5b. A stop element 28 may be fixed on column 12 to determine the horizontal posture of baffle plate 22 and prevent it from pivoting too far. The merchandise stored on lower half portion of column 12 is thus heated. The heated air after heat exchange with merchandise is finally sucked into air duct 19 to be returned to space 15.

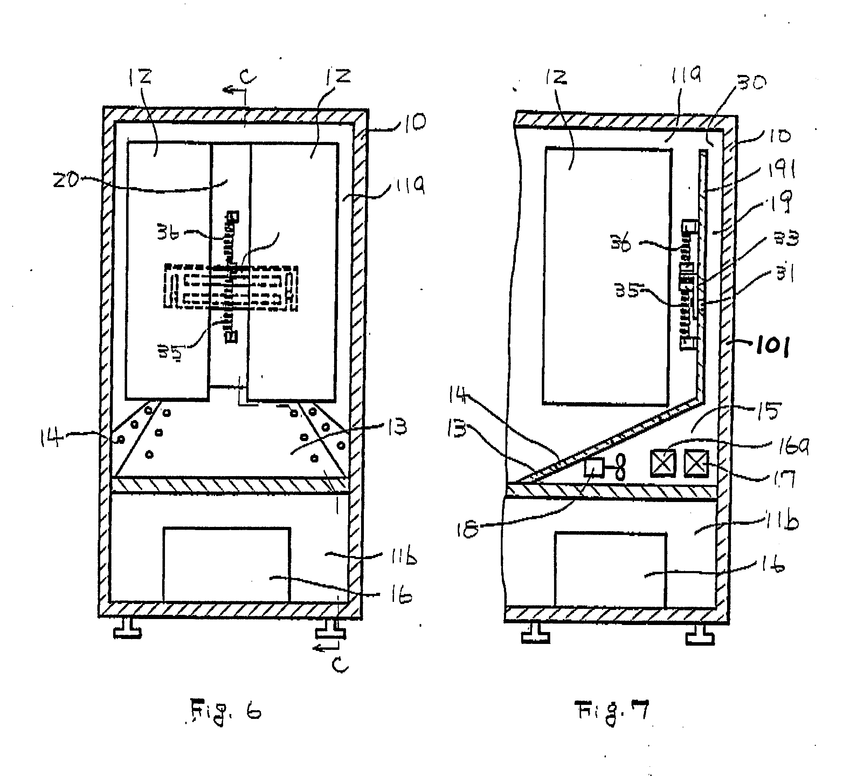

Figs. 6 and 7 illustrate another embodiment of this invention wherein parts which are similar to the parts shown in Figs. 3 and 4 are indicated by the same numbers, and their detailed description is omitted.

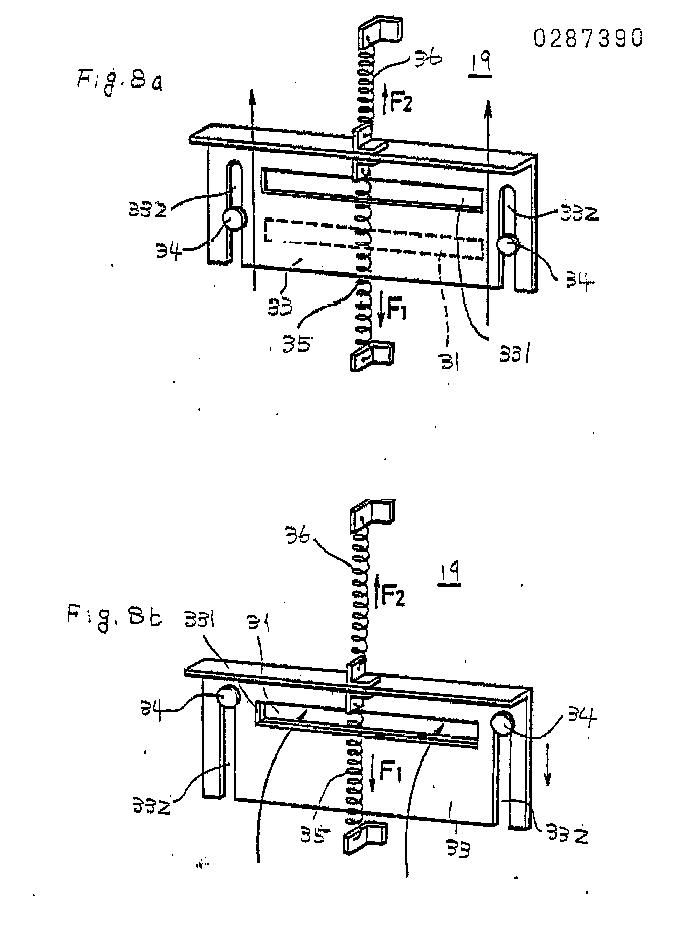

An air duct 19 is defined between the rear wall 101 of the vending machine 10 and a duct plate 191. It has a first suction opening 30 at the upper portion of the storage chamber 11a. A rectangular-shaped hole 31 is formed through the duct plate 191 to provide a second suction opening 31. This second suction opening 31 is opposed to a mid-way portion of the columns 12. A cover plate 33 is slidably attached on one side surface of duct plate 191 so as to be capable of obstructing the second suction opening 31. As shown in Fig. 8a, the cover plate 33 has a rectangular hole 331 which can be aligned with the second suction opening 31 to form an air flow-way. The sliding motion of cover plate 33 is controlled by a guide mechanism, such as lateral slots in the plate 33, engaging pins 34 fixed on the duct plate 191. This determines the stopped position of the cover plate when it is pulled downwardly, thus ensuring alignment of hole 331 of cover plate 33 and second suction hole 31.

The operation of sliding motion of cover plate 33 is actuated by a pair of spring elements 35,36: a bias spring element 36 which pulls the plate upwardly, and an opposed drive spring element 36 which is formed of shape memory alloy. Therefore, the difference of recoil strength of spring elements 35,36 causes the sliding motion of cover plate 33 and controls the opening and closing of the second suction opening 31.

The recoil strength (F1) of drive spring 34 under normal temperature condition is determined to be lower than recoil strength (F2) of bias spring 35 (F1 $<$; F2), therefore cover plate 33 is pulled upwardly by the bias spring 35. At that time, second suction opening 31 is fully covered by cover plate 33. Thus, refrigerated air is passed along the columns and returned to space 15 through the first suction opening 30. (This situation is shown in Fig. 8a.)

If the drive spring 34 experiences a termperature above its transformation temperature, its recoil strength (F1) becomes greater than the recoil strength (F2) of the bias spring 35. Therefore the cover plate 33 is pulled downwardly, so that the hole 331 of cover plate 33 is aligned with the second suction opening 31, to allow heated air into the air duct 19. Thus, only merchandise stored in the lower portion of the columns 12 is heated. (This situation is shown in Fig. 8b.)

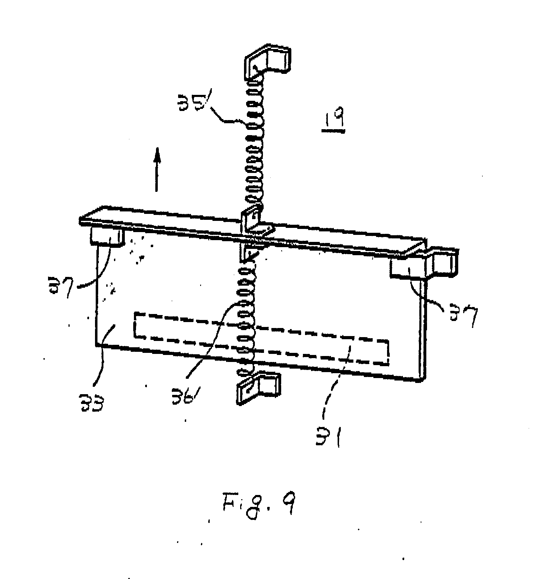

If cover plate 33 is hung on a drive spring 35' formed of shape memory alloy, and pulled downwardly by a bias spring 36', as shown in Fig. 9, hole 331 on cover plate 33 can be omitted. The opening and closing of the second suction opening 31 is controlled by cover plate 33, in other words, when the second suction opening 31 is opened, cover plate 33 is totally removed from the second suction opening 31. In this structure, the sliding motion of cover plate 33 may be guided by L-shaped brackets 37 attached to the duct plate 191.

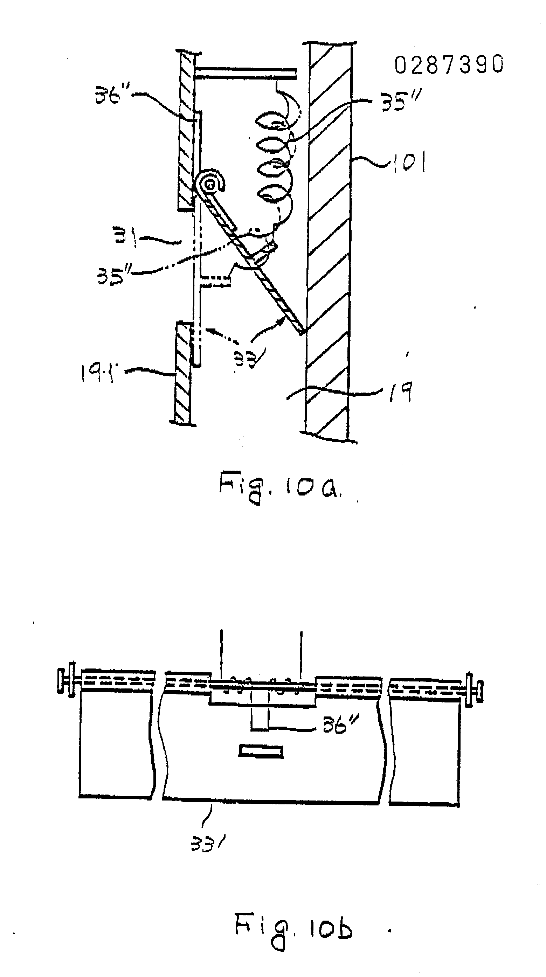

Alternatively the opening and closing of the second suction opening 31 may be controlled by a cover plate 33' hinged on a duct plate 191 as shown in Fig. 10. Cover plate 33' is pushed against duct plate 191 to cover the opening of the second suction opening 31 by bias spring 36", and pulled by drive spring 35" formed of shape memory alloy to open the opening of second suction opening 31. Therefore, rotatable movement of cover plate 33' is controlled due to difference of recoil strength between bias and drive springs 35" and 36".

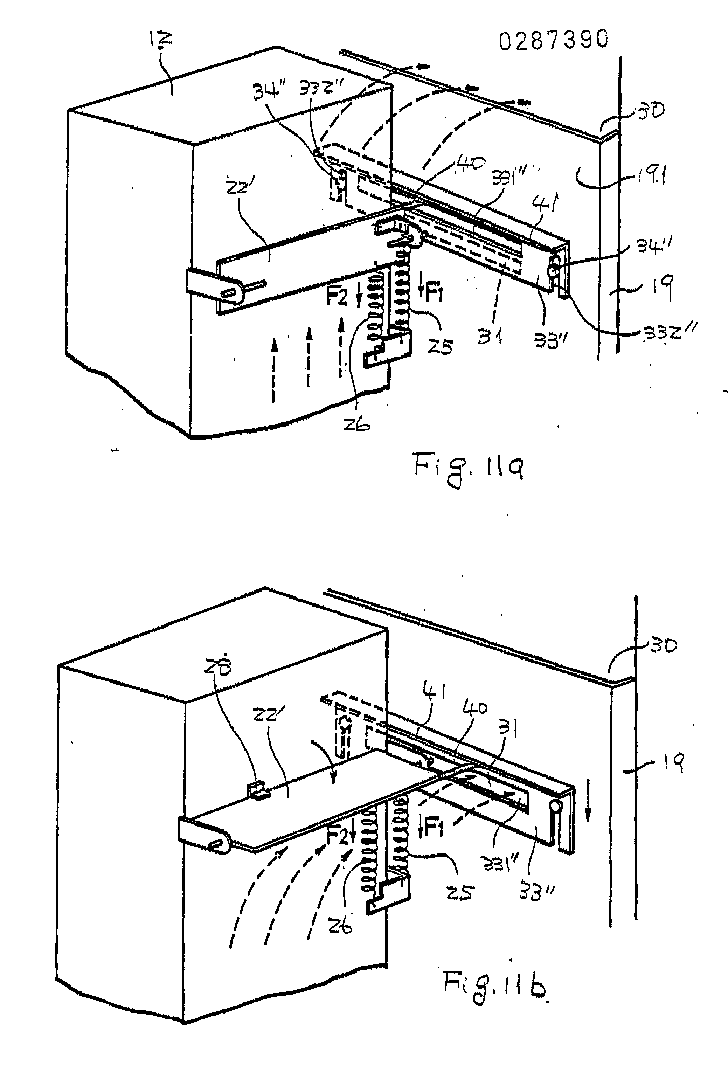

Fig. 11 illustrates a modification of the air circulation control device in Figs. 6 and 7. In the device of Figs. 6 and 7. sliding motion of cover plate 33 is directly controlled by difference of recoil strength between the drive and bias springs, but in this embodiment, cover plate 33' is controlled by an air circulation control device 21 as shown in Figs. 3 and 4.

A control lever 40 extends from a corner edge of baffle plate 22' toward duct plate 191. Control lever 40 is engaged with a horizontal flange 41 formed on the upper edge of a cover plate 33". Therefore, sliding motion of cover plate 33" to control the opening and closing of second suction opening 31 depends upon pivoting of the baffle plate 22'. This pivoting is controlled by the difference of recoil strength between drive and bias springs, as explained with reference to Figs. 5a and 5b. Therefore, if baffle plate 22' is positioned parallel with air gap 20 to allow the refrigerated air flow, the second suction opening 31 is closed by cover plate 33". (This situation is shown in Fig. 11a.) At that time, merchandise stored on column 12 is fully refrigerated by refrigerating air passed among the column and along the air gap 20.

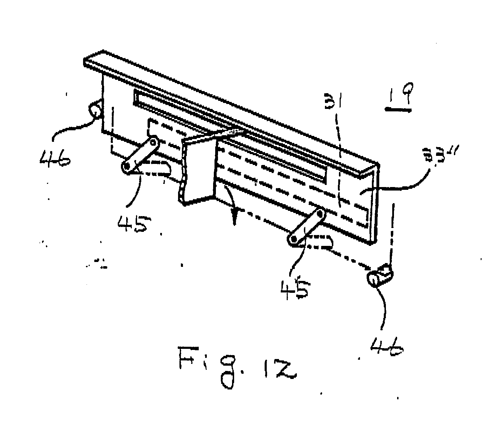

When the baffle plate 22' has pivoted to obstruct the air gap 20, the second suction opening 31 is opened to form the air by-pass way. (This situation is shown in Fig. 11b.) At that time, only merchandise stored on the lower half portion of column 12 is heated by heating air. Merchandise stored in the upper half portion of column 12 can be held at ambient temperature. In this embodiment, the sliding motion of cover plate 33" is guided by pins 34 and slits 331". Alternatively, movement of cover plate 33" may be guided by a crank lever 45, as shown in Fig. 12. In this embodiment, cover plate 33" has a swing motion. Its moving range is restricted by a pair of pin elements 46.

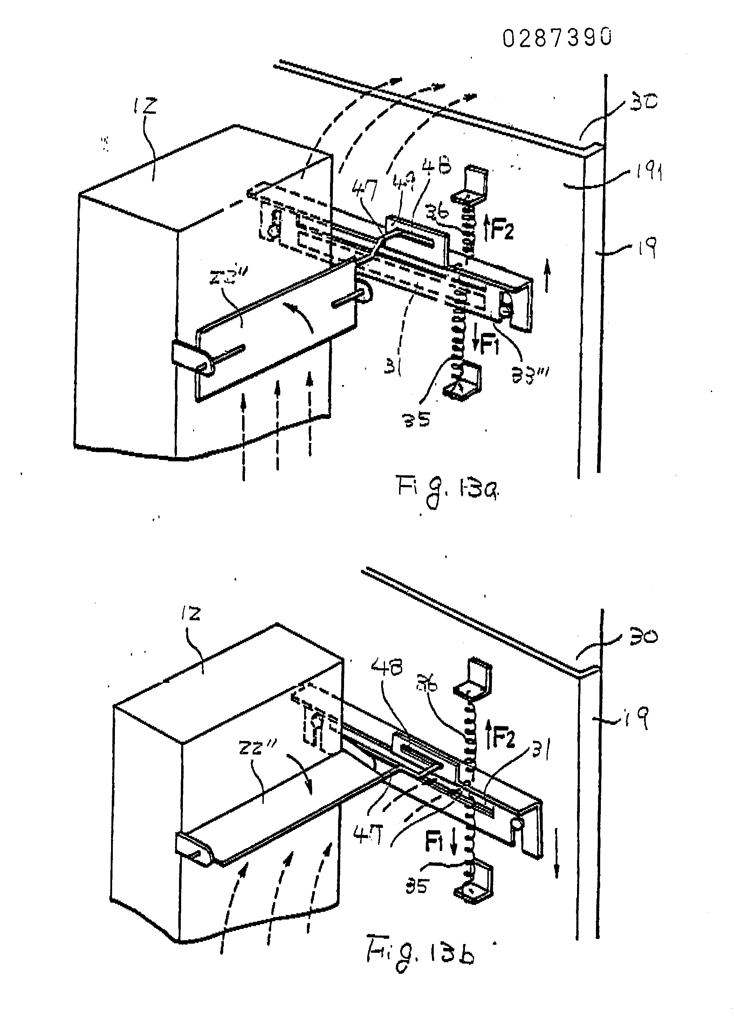

Fig. 13 illustrates a further modification of the air circulation control device in Figs. 3 and 4. Here, the rotating operation of baffle plate 22" to control the air flow passed through air gap 20 depends upon the sliding motion of a cover plate 33i which is controlled by differences of recoil strength of bias and drive springs 35,36, as explained with reference to Figs. 8a and 8b.

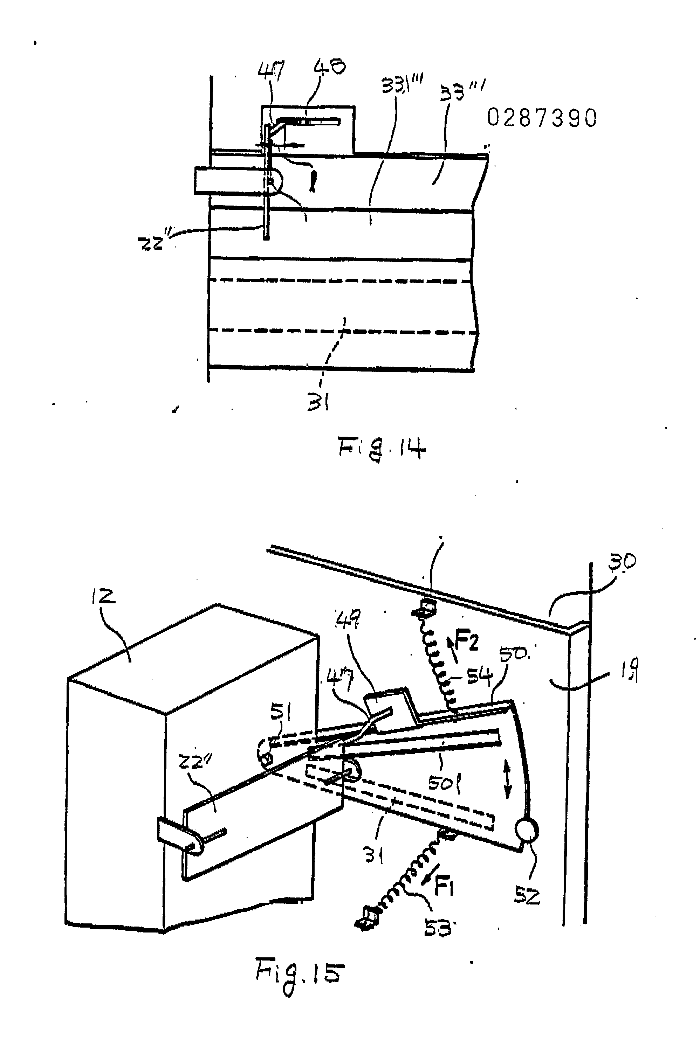

A control lever 47 projects from one edge corner of baffle plate 22" toward duct plate 191. It engages in an elongate rectangular hole 48 formed in a projecting flange 49 of the cover plate 33i. When the cover plate 33i is arranged to close the second suction hole 31 and the baffle plate 22" is positioned vertically, that end of hole 48 which is closer to the baffle plate 22" should be offset from the vertical position of baffle plate 22" to secure smooth movement of the baffle plate 22". This relationship is shown in Fig. 14. Therefore, baffle plate 22" rotates in dependence upon the sliding motion of cover plate 33i. In Fig. 13a, merchandise stored on the columns is fully refrigerated, because baffle plate 22 does not act as a bar to air flow and second suction hole 31 is closed by cover plate 33i. On the other hand, in Fig. 13b, merchandise stored on the lower half portion of the columns is concentrically heated, because baffle plate 22" acts to interrupt the return of heating air to space 15 through second suction opening 31.

In this embodiment cover plate 33i is vertically slidable along the side surface of duct plate 191 due to change of recoil strength of bias and drive springs 35,36. Alternatively, cover plate 50 is disposed on one side surface of duct plate 191 to enabel rotating motion around a central fixed pin 51, and guided by a guide plate 52, as shown in Fig. 15. That is cover plate 50 is arc shaped and provided with a rectangular hole 501 to form an air by-pass way. Opposed spring elements 53,54 engage respective opposite edges of the cover plate 50. Therefore, cover plate 50 is rotated around fixed pin 51 in accordance with change of recoil strength of spring elements 53,54, one of the spring elements being formed of shape memory alloy.

## Claims

1. A vending machine (10) including a storage chamber (11a) having means defining a plurality of columns (12) for merchandise, extending in parallel; refrigerating (16a) and/or heating (17) means for causing refrigeration and/or heating of merchandise stored on said columns (12), said means comprising a refrigerating/heating device (16a,17) disposed in or adjacent a lower portion of said storage chamber (11a) and air circulation means comprising an air circulation duct (19) for communicating between a space (15) in which said refrigerating/heating device (16a,17) is disposed and the storage chamber (11a) adjacent the merchandise; and an air gap (20) defined between respective said columns (12); characterised in that said duct (19) has an upper opening adjacent the upper end of said columns (12), and wherein an air circulation control device (21) is disposed in said air circulation way for controlling the air flow path in dependence upon the temperature conditions of the merchandise.

2. A vending machine according to claim 1 wherein said circulation control device comprises a displaceable barrier (22;33) level with an intermediate region of the columns (12), and temperature-dependent urging means (25,26;35,36) for urging displacement thereof.

3. A vending machine according to claim 2 having selectively operable heating means (17) and refrigerating means (16), and wherein below a predetermined temperature the temperature-dependent urging means (25,26;35,36) urges displacement of the barrier (22;33) to facilitate circulation via said upper opening such that the cooling effect of the refrigerating means (16) affects substantially the whole height of the columns (12); whereas above the predetermined temperature, circulation via said upper opening is lessened or obstructed so that the effect of the heating means (17) substantially affects only a lower portion of the columns (12).

4. A vending machine according to claim 2 or 3 wherein the temperature-dependent urging means comprises a pair of spring elements (25,26;35,36) urging displacement of the barrier (22;33) in different senses; one said spring element comprising a shape memory alloy so that its strength relative to the other spring element is temperature-dependent.

5. A vending machine according to any of claims 2 to 4 wherein said barrier (22) is disposed in the air gap and is displaceable towards and away from a configuration in which it extends substantially across the air gap (20).

6. A vending machine according to any preceding claim wherein said duct (19) has said upper opening adjacent the upper end of the columns (12), and a suction opening (31) adjacent an intermediate region of the columns (12); and the circulation control device (21) acts to control the relative amounts of air circulating via said upper and suction openings.

7. A vending machine according to claim 6 wherein said air circulation control device (21) comprises a plate displaceable to open and close said suction opening (31).

8. A vending machine according to claim 7 further including a barrier (22) displaceable to obstruct the air gap (20); the displacements of the barrier (22) and plate (33) being coupled.

9. A vending machine according to claim 6,7 or 8 wherein said air circulation control device (21) comprises a plate (33') displaceable between a configuration in which it obstructs the suction opening (31), and a configuration in which it extends across the duct (19).

0287390

Fig. 1

Fig. 2

prior art

Fig. 3

Fig. 4

0287390

Fig. 5a

Fig. 5b

Fig. 6

Fig. 7

0287390

Fig.8a

36  19

F₂

332  332

34  34

93  331

35  31

Fig.8b  331  31  19

36

F₂

34  34

332  332

35  33

Fig. 9

0287390

Fig. 10a.

Fig. 10b

0287390

Fig. 11a

Fig. 11b.

0287390

Fig. 12

0287390

Fig. 13a

Fig. 13b

0287390

Fig. 14

Fig. 15